# EUROPEAN PATENT APPLICATION

(11) **EP 3 364 723 A1**
(43) Date of publication of application: **22.08.2018**
(21) Application number: 17192765.0
(22) Date of filing: 22.09.2017
(51) Int. Cl.: H05B 33/08

(54) **CURRENT SPLITTING ADAPTER FOR A POWER SYSTEM OF LED MODULES**

(30) Priority: 21.02.2017 EP 17157268
(71) Applicant: General Led Inc., San Antonio, TX 78216 (US)
(72) Inventor: Vo, Vung Van, San Antonio, TX 78247 (US); Moya, Steven, San Antonio, TX 78216 (US); Huang, Michelle, San Antonio, TX 78216 (US)
(74) Representative: Ashton, Timothy

(57) **Abstract**

A system for splitting current for use in a power system with light emitting diode (LED) modules including a current splitting adapter. The current splitting adapter receives a single direct current electrical energy output from a direct current power supply and divides the current into two electrical output channels. The LED modules are connected in a daisy-chain configuration with an end plug at the end of the chain. An end plug takes the outputs from the LEDs in the last LED module and combines them with a common conductor. The end plug completes the circuit by connecting a common conductor to a common wire that runs from the power source through all the LED modules.

## Description

### BACKGROUND OF THE INVENTION

### 1. Field of the Invention

The present invention pertains to internally-illuminated signage and illumination of such signage through the use of LED modules. More particularly, the present invention relates to systems and methods for providing constant current to signage lighting configurations connected to conventional direct current electrical energy power supplies to LED configurations with one or more sets of series-connected LED modules.

### 2. Description of Related Art

Those of ordinary skill in the art will understand that direct current (DC) supply of electrical energy to a light emitting diode (LED) is superior to alternating current (AC) because it minimizes the undesirable flickering of light which is known to occur when the electrical energy supplied to an LED is a source of AC electrical energy. Specifically, a constant amount of DC electrical energy applied to an individual LED causes the individual LED to emit a stable, non-flickering output of visible light.

Because individual LEDs emit a stable, non-flickering output of visible light when a direct current (DC) is applied to the individual LED, it becomes necessary to transform commonly available sources of AC electrical energy into DC supplies of electrical energy. Typically, such transformation of AC electrical energy into DC electrical energy is accomplished by the use of a DC electrical energy power supply. A power supply may also be referred to generally as a "driver" in this description. This DC electrical energy power supply takes the alternating current (AC) electrical energy from the AC electrical line as input, conventionally 110 volt AC/60 Hz, or 220 volt AC/50 Hz, and converts the input of alternating current (AC) into direct current (DC) electrical energy as an output.

For a DC electrical energy power supply with a constant current DC output, its rated output wattage determines the maximum output DC voltage at the rated constant current DC output. For example, a constant current DC electrical energy power supply rated at 60 watts and 1 ampere DC, provides an output electrical energy as a constant DC current of 1 ampere, and a DC electrical voltage of 0 to 60 volts (60 watts/1 amp=60 volts). The electrical load applied to the output (0-60 watts) of the constant current DC power supply determines the actual output of DC voltage from this constant current DC electrical energy power supply.

When the DC electrical energy power supply provides a constant current DC output, each LED module in the string of LED modules receives the same DC amperage as input electrical energy to illuminate the LEDs and thereby consumes a certain amount of DC voltage from the DC electrical energy power supply. The maximum number of LED modules that can be powered by this DC electrical energy power supply is determined by the rated DC voltage of each LED module, and the power supply's rated output DC wattage and constant current DC. For example, if an LED module is rated at 0.5 amperes and 3.0 volts DC, a DC electrical energy power supply rated at 0.5 amperes and 60 watts DC can power a maximum of 40 LED modules (60 watts/3.0 volts/0.5 amperes=40 LED modules).

For a DC electrical energy power supply with a constant voltage DC output as is commonly used, its rated output wattage determines the maximum output of DC current at the rated output of constant voltage DC. For example, a constant-voltage DC electrical energy power supply rated at 96 watts and 24 volts DC provides an output electrical energy at a constant DC voltage of 24 volts, and a DC electrical current of 0 to 4 amperes (96 watts/24 volts=4 amperes). The electrical load applied to the output (0-96 watts) of the constant voltage (DC) power supply determines the actual output of DC current from this constant voltage DC electrical energy power supply.

When the DC electrical energy power supply provides a constant voltage DC output, each LED module in the string receives the same DC voltage as input electrical energy to power the LEDs and thereby consumes a certain amount of DC amperage from the DC electrical energy power supply. The maximum number of LED modules that can be powered by this DC electrical energy power supply is determined by the rated DC amperage of each LED module, and the rated output DC wattage and constant DC voltage of the DC power supply. For example, if an LED module is rated at 24 volts and 0.2 amperes DC, a DC electrical energy power supply rated at 24 volts and 96 watts DC can power a maximum of 20 LED modules (96 watts/24 volts/0.2 amperes=20 LED modules).

Those of ordinary skill in the art will understand that constant current LED drivers are preferred in the electrical sign industry. A constant current driver varies the voltage across the circuit in order to maintain a constant electrical current. Constant voltage LED strings require individual drivers for each LED module in order to maintain the same voltage. With a constant voltage (CV) driver, small changes in forward voltage can cause large increases in current driven to the LED. Higher current can over-drive the LED if it exceeds the maximum current rating. In the absence of a current limiting device, the current can continue to rise above the maximum limit, especially in higher temperature environments. Excess current creates additional heat and reduces the lifespan of LEDs in a process called thermal runaway. Additionally, differences in current cause changes in brightness which is undesirable in an industry that desires consistent luminosity

Presently, many designs require additional constant voltage power supplies in order to support existing integrated circuit (IC) constant current drivers. The tolerance for the IC is +/- 5% and the total difference between the two current outputs is approximately 10%. These values are too high and result in a luminance output that is non-uniform. The IC is also affected by temperature and has a negative temperature coefficient (NTC). The NTC reduces the current output and as voltage compliance increases across the current splitter, efficiency is reduced. Additionally, existing IC designs have low power efficiency and can only connect as a source or sink, but not both. Existing designs with constant current diodes have a tolerance of +/- 20%, resulting in a total difference between current outputs of 40% and non-uniform luminance.

Therefore, there is a long felt need in the art for a system and method with low tolerance, high current output, independent of temperature, which is also capable of connecting as a source or sink.

### SUMMARY OF THE INVENTION

**The** embodiments disclosed and described herein include systems for splitting an electrical current, wherein the systems operate within a lighting assembly that includes a direct current (DC) power supply and at least one light emitting diode (LED) module. The disclosed systems include a current splitting adapter having an enclosure comprising a rigid case, the enclosure having a first end and a second end. The system further incorporates an integrated circuit contained within the enclosure, wherein the integrated circuit comprises two functionally identical circuits configured for maintaining a constant current, at least one current reference, and a current amplifier in each of the two functionally identical circuits. More particularly, the current amplifier comprises two transistors. Disclosed systems include a sealant material located on at least a portion of the enclosure, wherein the sealant material provides a moisture barrier. Disclosed systems further include two electrical inputs at the first end of the enclosure, wherein the two electrical inputs receive DC electrical energy from the DC power supply. These electrical inputs comprise a first electrical input wire having a polarity and a second electrical input wire having a polarity opposite of the first electrical input wire, and the second electrical input wire is a common wire. Disclosed systems further include three electrical outputs at the second end of the enclosure. These three electrical outputs comprise two electrical output wires each having the same polarity as the first electrical input wire, as well as the common wire which has a polarity opposite of the two electrical output wires. Disclosed systems operate such that a current of the first electrical input wire is divided within the integrated circuit, the current division enabling output of the two electrical output wires each having the same polarity as the first electrical input wire. The two electrical output wires and the common wire are in electrical communication with at least one LED module.

**A** preferred embodiment of the invention is a power system with a conventional electrical energy power supply, operating at constant current, with a current splitting adapter, connected to a string of interconnectable LED modules. In contrast to constant voltage systems, constant current systems as described herein are able to maintain the same current independent of temperature changes. Disclosed constant current systems are also more efficient than constant voltage systems because they do not waste energy using drivers on each LED module. Moreover, the voltage across the current splitting adapter is maintained at a low value which further results in high efficiency.

The current splitting adapter disclosed herein receives a single DC electrical energy output from a power supply and splits the current into two electrical channels so that there are two current outputs from the current splitting adapter. Preferably, the DC electrical energy power supply is a constant current power supply such that the single constant current input to the current splitting adapter is split into two constant current outputs from the current splitting adapter.

In some disclosed embodiments, the current splitting adapter has on the output side of the two electrical channels and a common wire. The output from the current splitting adapter may then connect to a first LED module utilizing connector assemblies. Such connector assemblies include a male connector and a female connector where the male connector connects to the female connector. The two electrical channels and the common wire run from the female connector to an LED module.

Preferably, each LED module includes a female connector on the input side and a male connector on the output side. In this way, each LED module can be connected to another LED module to form a string of LED modules. By utilizing these connector assemblies, each LED module can be readily and easily connected and detached from the other LED modules.

In order to complete the circuit within the string of LED modules, an end plug is located at the end of the string of LED modules. The end plug brings together the outputs from the last LED module and completes the electrical circuit through a single connection or wire to a common ground at the DC electrical energy power supplies.

### BRIEF DESCRIPTION OF THE DRAWINGS

A better understanding of the present invention may be had from the drawings as described in greater detail in the DETAILED DESCRIPTION OF THE EMBODIMENTS section which follows.
FIG. 1A is a top plan view of a preferred embodiment of the current splitting adapter **10.**
FIG. 1B is a bottom plan view of a preferred embodiment operating at low power and constant current.
FIG. 2A is a schematic diagram of an integrated circuit **100** for use in the current splitting adapter 10 of FIG. 1A and FIG. 1B.
FIG. 2B is a schematic diagram of an alternative integrated circuit **250** for use in the current splitting adapter **10** of FIG 1A and FIG. 1B.
FIG. 2C is a schematic diagram of an alternative integrated circuit **100'** for use in the current splitting adapter **10** of FIG. 1A and FIG. 1B, particularly for use in the lighting system as shown in FIG. 4, wherein current splitting adapter **10** is used as a current sink.
FIG. 2D is a schematic diagram of an alternative integrated circuit **100"** for use in the current splitting adapter **10** of FIG. 1A and FIG. 1B.
FIG. 3A is a schematic diagram of an LED lighting system with the current splitting adapter **10** connected as a source in a string of LED modules.
FIG. 3B is a schematic diagram of an alternative LED lighting system with LED modules mounted in carriers.
FIG. 4 is a schematic diagram of an alternative LED lighting system with the current splitting adapter **10** connected as a sink in a string of LED modules.
FIGS. 5A and 5B are diagrams of a three-pin connector assembly **14** used within a string of LED modules.
FIG. 6 is a schematic diagram of an end plug **50** used within a string of LED modules.
FIG. 7 is a schematic diagram describing an electrical bridge circuit **90** which actuates when one of the individual LEDs is no longer able to pass DC electrical energy.

### DETAILED DESCRIPTION OF THE EMBODIMENTS

For ease of use and incorporation into systems using LEDs to provide light energy, individual LEDs are typically incorporated into various types of LED modules. Such LED modules contain either a single individual LED, multiple individual LEDs in a series connection, multiple individual LEDs in parallel connections, or sets of series-connected individual LEDs in parallel connection.

As previously discussed in the "Background of the Invention," the number of LED modules in the string of LED modules depends on the amount of energy provided by the positive polarity DC electrical energy supply and the amount of electrical energy needed for each individual LED to emit the desired level of light energy.

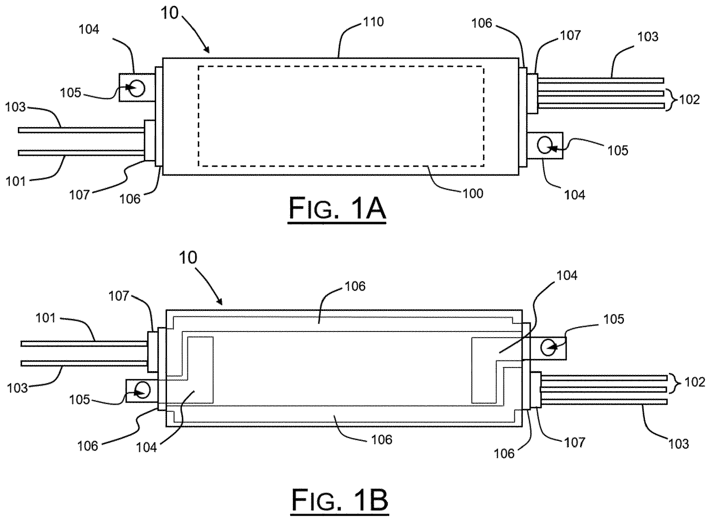

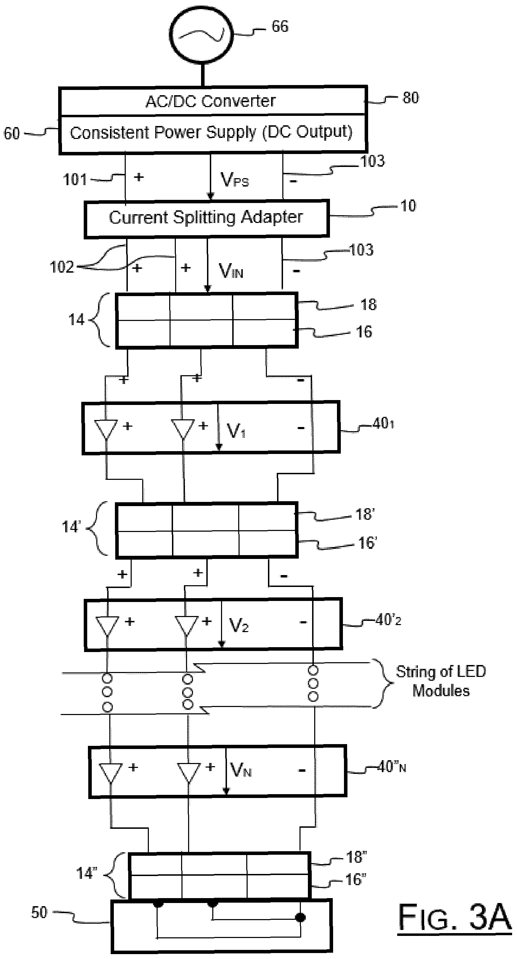

Referring to FIG. 1A, there is shown a top view (not to scale) of a current splitting adapter **10.** The current splitting adapter **10** includes an integrated circuit (IC) **100** protected and contained within an enclosure **110.** Enclosure **110** is preferably a rigid case constructed of polycarbonate or polymethyl acrylate, although other suitable materials may be used. Two wires are shown on the input side of current splitting adapter **10,** these being a positively charged wire **101** and a negatively charged common wire **103.** The positively charged wire **101** and the negatively charged common wire **103** represent the output from DC power supply **60** (particularly shown in FIG. 3A). Wire **101** and common wire **103** connect current splitting adapter **10** to power supply **60.** The positively charged input current entering current splitting adapter **10** via wire **101** is divided or split into two positively charged outputs via wires **102.** These positively charged wires **102** and the common wire **103** on the output side of current splitting adapter **10** connect the current splitting adapter **10** to a first LED module **40** (as shown in FIG. 3A) in a string of LED modules.

Also shown are projections **104,** one each extending from the ends of current splitting adapter **10.** Each projection **104** has a substantially circular opening **105** which is conveniently sized and shaped to receive a fastener passing therethrough for mounting current splitting adapter **10** to a surface. Any type of suitable fastener may be used, including but not limited to, a screw, a bolt, and the like. It is anticipated that projections **104** would be made of the same or similar to material as that of rigid case **110,** although other suitable materials may be used. In preferred embodiments, projections **104** are integral with rigid case **110.**

Turning to FIG. 1B, there is shown a bottom view (not to scale) of the current splitting adapter **10.** Projections **104** are more particularly shown at both ends of current splitting adapter **10.** Projections **104** are shown to be integral with the bottom surface of the current splitting adapter **10.** In preferred embodiments, projections **104** are integral with rigid case **110,** forming extensions of the bottom surface thereof. Additional shapes and positions for projections **104** and methods of attachment are contemplated.

To protect current splitting adapter **10** from moisture, there is shown a sealant material **106** on portions of the bottom surface as well as each of the ends of current splitting adapter **10.** The sealant material **106** is preferably a thermoplastic elastomer and is used to seal any seams or openings in the current splitting adapter **10** and protect from water damage. The sealant material **106** is located underneath the current splitting adapter **10** along the edges and on the sides to seal the openings into which wires **101** and **103** enter current splitting adapter **10,** as well as the openings from which wires **102** and **103** exit current splitting adapter **10,** as shown in FIGS. 1A and 1B. Furthermore, sealant material **106** forms a strain relief **107** around wires **101, 102** and **103.**

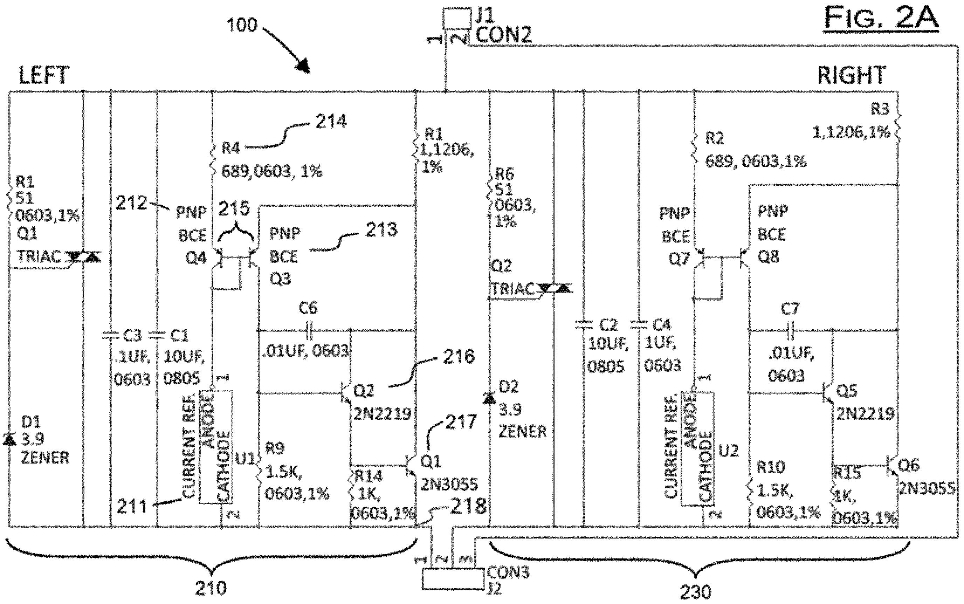

Referring to FIG. 2A, there is shown a schematic diagram of the IC **100.** The embodiment has a left circuit **210** and a right circuit **230** that operate to maintain constant current. It should be understood that both the left **210** and right **230** circuits function identically, such that each produces a constant current output. To avoid redundancy only the left circuit **210** is described in detail here but it should be understood that the right circuit **230** functions identically.

In the left circuit **210,** the constant current flows from the current reference **211** through the first PNP transistor **212.** The first PNP transistor **212** converts a 1 milliamp current to 0.689 V by using a 689 ohm resistor **214** at the emitter. The two PNP transistors **212, 213** operate together as a current amplifier **215.** Those of ordinary skill in the art will understand that the ratio of current output to current input for a transistor is the Beta value (*β*) and can vary depending on the temperature. An important advantage of the IC in FIG. 2A is the current amplifier **215** eliminates the temperature dependence of *β*. Consequently, the left circuit **210** has high current output independent of the ambient temperature.

Further along the left circuit **210,** the emitter of the second PNP transistor **213** combines with collector **216** and collector **217** to one node **218.** The current at node **218** is 689 milliamps, calculated from a voltage of 0.689 volts and a 1 ohm resistor sensor. The base voltage is 0.689 volts from the first PNP transistor **212** and the second PNP transistor **213** maintains a constant voltage of 0.689 volts with a 1 ohm current sensor.

Additionally, the circuit feedback tries to adjust the voltage to 0.689 volts across a 1 ohm current sensor and set the current to 689 milliamps. For example, if the current is low, the second PNP transistor turns on more causing the current amplifier **215** to turn on more and increase the amount of current. If the current is high, the second PNP transistor **213** turns on less causing the current amplifier **215** to turn on less and decrease the amount of current. Those of ordinary skill in the art will understand that transistor **216** and transistor **217** function as a Darlington pair of the current splitter **10** that further amplifies the current to yield high current output.

Additional features of this alternative embodiment include low current regulator tolerance, voltage gain, and a 100-volt voltage limit for the power supply. The low current regulator tolerance varies between 1-3% depending on the type of current reference device **211** used. The voltage gain can be up to 2000 times using a medium bipolar junction transistor (BJT). The no compliance voltage limit uses over voltage protection to keep the working voltage inside a maximum limit of 2.5 volts. Over voltage protection, with a 100-volt limit causes the switch to turn on and shut down the current splitter to enable current to pass to the LEDs.

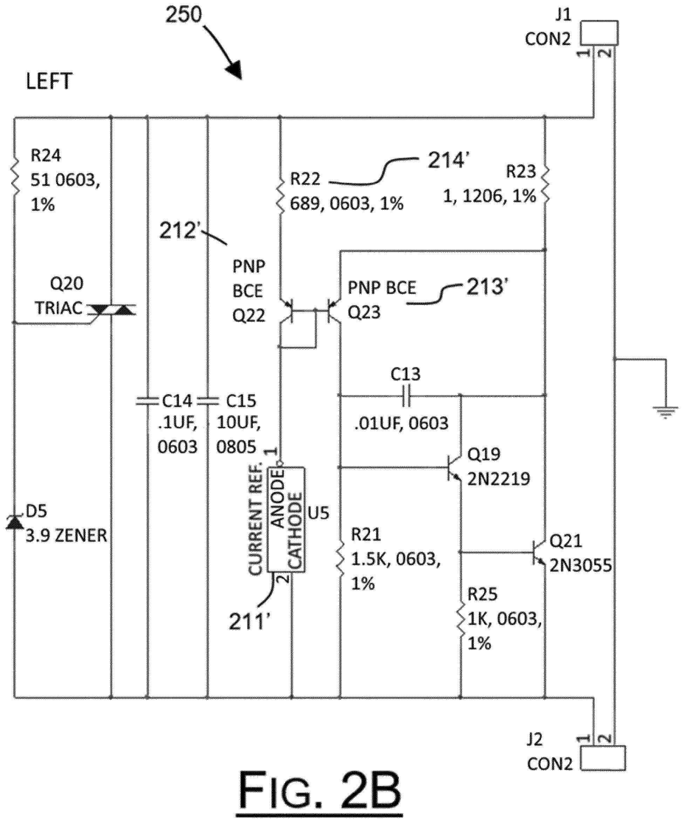

Turning to FIG. 2B, there is shown a schematic diagram of an alternative embodiment of an IC **250** for use with the disclosed current splitting adapter **10.** IC **250** operates at low power and constant current. The IC **250** is used in applications with a total current of 150 milliamps or less. The IC **250** has no Darlington pair but works very similarly to circuit **100** but with a lower power output. The low power constant current circuit **250** has low voltage head room estimated at 0.8 volts. It also has some advantages such as low cost, a low current tolerance of +/- 2%, high efficiency, and the ability to maintain constant current independent of temperature.

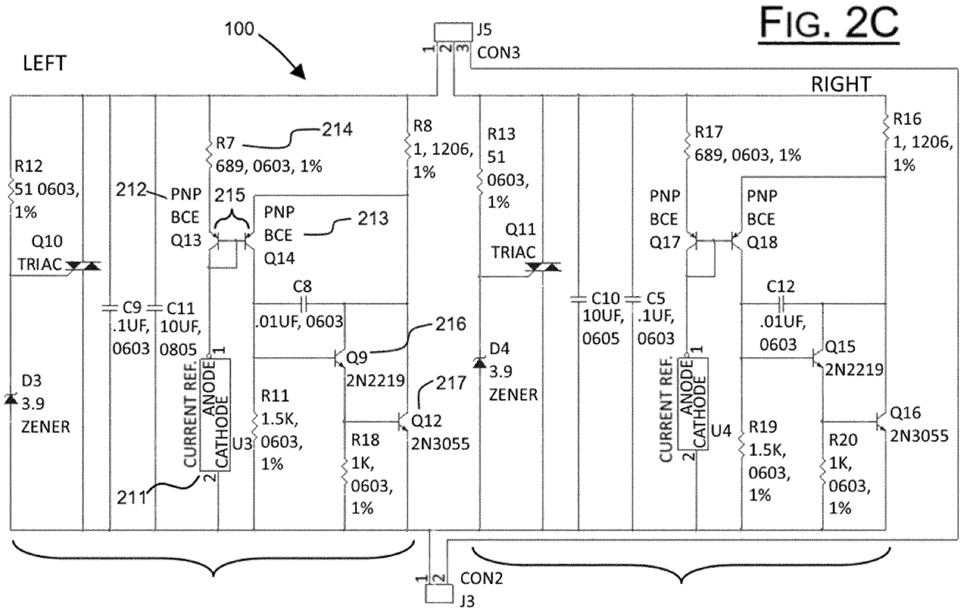

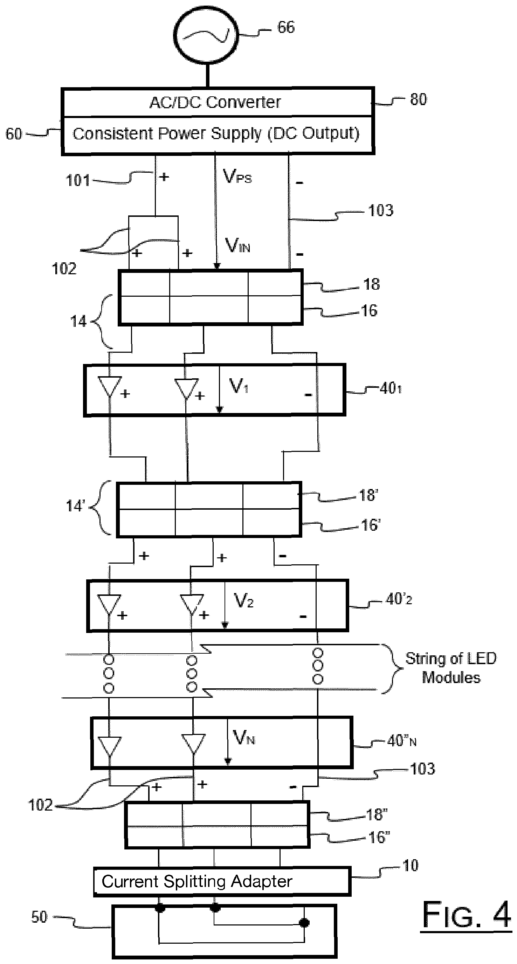

Referring to FIG. 2C, there is shown a schematic diagram of an alternative embodiment of IC **100'** for use with the disclosed current splitting adapter **10.** Particularly, this embodiment may be employed in configurations in which current splitting adapter **10** is employed as a current sink. Such a configuration is shown in the lighting assembly illustrated in FIG. 4. The components of IC **100'** perform in essentially the same manner as described above with reference to IC **100.**

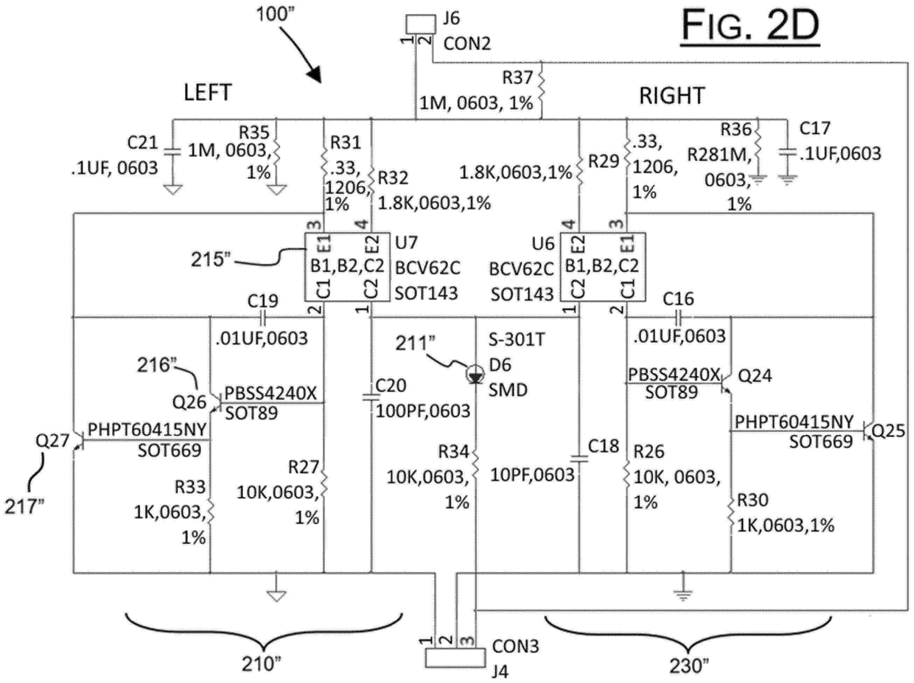

Turning now to FIG. 2D, there is shown a schematic diagram of an alternative embodiment of an integrated circuit, referred to herein as IC **100",** for use in disclosed embodiments of current splitting adapter **10.** Many of the same features of IC **100** are shown in IC **100"** illustrated in FIG. 2D. There is shown a left circuit **210"** and a right circuit **230",** each of which provides identical functionality. Current amplifier **215"** is shown in each circuit of IC **100"** which functions in a similar manner to the current amplifier **215** of FIG. 2A. Furthermore, there is shown a Darlington Pair, including transistors **216"** and **217"** which also function in a similar manner to the counterpart transistors **216** and **217** shown in FIG. 2A.

One difference between IC **100** and IC **100"** is that, rather than left circuit **210"** and right circuit **230"** each having a current reference, in the embodiment of IC **100"** they each share a current reference **211",** shown between left circuit **210"** and right circuit **230".**

An additional feature of this alternative embodiment includes a 100-volt voltage limit for the power supply. The no compliance voltage limit uses over voltage protection to keep the working voltage inside a maximum limit of 2.5 volts. Over voltage protection, with a 100-volt limit causes the switch to turn on and shut down the current splitter **10** to enable current to pass to the LEDs.

Referring to FIG. 3A, which is a schematic diagram of a LED system with the current splitting adapter **10** connected as a source in a string of LED modules. As shown, the disclosed system adds the current splitting adapter **10** between the DC electrical energy power supply **60** and the LED module **40.** The current splitting adapter **10** takes the single DC electrical energy output and splits the current **101** into two electrically positive channels **102.**

One of the benefits of the present invention is the LED system can be powered using a conventional power supply. A conventional power supply takes an AC input **66** and converts it to DC. Those of ordinary skill in the art will know that the AC input **66** is converted to DC using an AC/DC converter **80.** The AC/DC converter **80** uses a rectifier (not shown) to change the AC input to a DC output. AC/DC converter **80** also uses a transformer (not shown) to reduce the high input voltage to the lower desired voltage.

The LED system shown in FIG. 3A uses a "consistent power supply" which is defined herein as a DC power supply that is regulated to provide output that is electrically constant one way or another. Generally, the consistent power supply is regulated to provide constant current.

It should be understood that the described and illustrated embodiments are exemplary in nature and are not meant to limit the disclosed system. Referring again to the example illustrated in FIG. 3A, the consistent power supply is represented by DC electrical energy power supply **60** which is the DC output that exits as a single DC electrical energy current **101.** Although only one DC electrical energy power supply **60** is shown in FIG. 3A, it should be understood that multiple such power supplies may be used within the context of the disclosed system, as needed for particular uses.

In the United States, regulations require that the maximum voltage for electrical signs (systems) not exceed 60 volts. When the DC electrical energy power supply **60** provides a constant current DC electrical energy output to a series connection of individual LEDs in the string of LED modules **40, 40', 40"** having multiple LEDs as shown in FIG. 3A, this DC constant current **101** from the DC electrical energy power supply **60** is equal to the needed DC electrical current through the individual LEDs within each LED module 40, **40', 40".** The amount of DC voltage required **V_{IN}** is the sum of the voltage requirements **(V₁, V₂, ...V_{N})** for each LED module **40, 40', 40"** in the string or series of LED modules **40, 40', 40".** In a circuit with constant current as in FIG. 3A, the total voltage is the sum of the voltages across each LED. Therefore, for a group of 3 volt LEDs connected in series, the total amount in the system is limited to 20 LEDs (60/30).

The maximum voltage of 60 volts in the U.S. does not restrict the system from using lower voltage power supplies. For example, for a system of 4 LEDs requiring 3 volts each, the total DC voltage required is 12 volts. For 10 LEDs, the total DC voltage required is 30 volts. The voltage **V_{PS}** of the DC electrical energy power supply **60** can vary so long as 60 volts is not exceeded.

In Europe, the maximum voltage for electrical signs is 220 volts, allowing for more LEDs per system. For example, with 220 volts DC, the maximum number of 3 volt LEDs in a system is 73 (220/3). As in the U.S., lower DC voltage can be used depending on the number of LEDs needed for the electrical system.

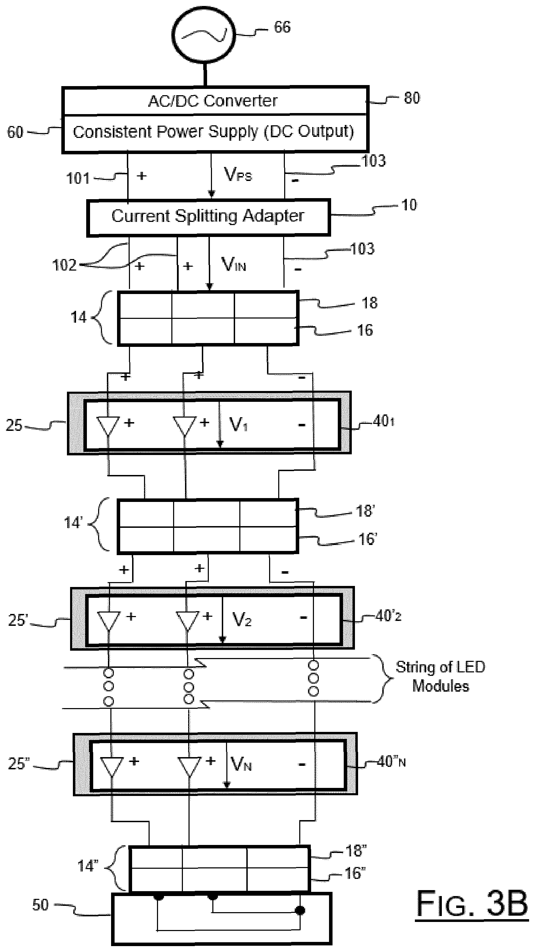

In FIG. 3A the single DC electrical energy output channel has a positive polarity. Therefore, the current **101** has a positive polarity and the common wire **103** has a negative polarity. Figures 3B-4 also have a positive current **101** and a negative polarity common wire **103.** It should be understood that the representations in Figures 3B-4 are exemplary references to any number of systems that may be implemented by the present invention. An alternative embodiment to the representations in Figures 3B-4 may have a negative current and a positive polarity common wire. These representations are not to be construed as limiting the present invention.

For reference purposes, the prime symbol (') and double prime symbol (") are used to distinguish the disconnect assemblies **14** and LED modules **40** that are identical but are connected in sequence (1...N). For example, the second disconnect assembly is labeled **14'** with the male connector **18'** and the female connector **16'.** The last disconnect assembly **14"** is connected to the end plug **50.** The last LED module (N) in the sequence is labeled as **40".**

FIG. 3A can also be described as a schematic of a lighting assembly for illumination of signage, including a string of interconnectable LED modules **40, 40', 40",** wherein each LED module of at least a subset of the string of interconnectable LED modules **40, 40', 40"** includes the same number of individual LEDs, with each LED module having a positive side and a negative side.

Furthermore, all of the individual LEDs in each of the LED modules **40, 40', 40"** are shown to receive a common positive polarity of DC electrical energy and where a single common wire (or current path) **103** for electrical current is shown on the right side of each schematic. The common wire **103** runs from the end plug **50** at the bottom of the string of interconnectable LED modules **40, 40', 40"** to the common negative polarity of the DC electrical energy power supply **60.** The use of a single common wire or current path **103** minimizes the complexity of the power system of the disclosed system. The common wire **103** is used as the single connection to the common negative polarity of the DC electrical energy power supply **60.** The common wire **103** is "embedded" into the LED modules by an isolated conductive trace, such as a copper trace for example, on a printed circuit board (not shown) inside each LED module **40, 40', 40".**

**A** printed circuit board provides mechanical support and DC electrical energy to the LEDs associated with each LED module **40, 40', 40".** A system may use at least one wire for inputting the DC electrical energy to the printed circuit board in the first LED module **40** and outputting the DC electrical energy from the first LED module **40** to the second LED module **40'** and inputting the DC electrical energy to the printed circuit board in the second LED module **40'** and then outputting the DC electrical energy to the next LED module **40"** in the string.

Alternative LED systems may include subsets of the string of LED modules **40, 40', 40"** with wires for input and output electrical connections within each individual series connection and a common wire **103** connected to the negative polarity of the DC electrical energy power supply **60.** The common wire **103** may be conducted through an opening in one or more LED modules **40, 40', 40".**

Since the number of LED modules **40** in the system can vary depending on the DC output voltage, FIG. 3A includes a continuation of the string of LED modules depicted by ellipses. For example, for a constant current system with 2 LEDs per module and 3 volt LEDs, each LED module requires 6 volts. Therefore, the maximum number of LED modules in the system is 10 (60/10). The number of LED modules will also vary for a system with a constant voltage DC power supply.

As shown in FIG. 3A, there is a three-pin disconnect assembly **14** connected to the current splitting adapter **10** and to the first LED module 40. Immediately below the current splitting adapter **10** is a first type of mating connector (male) **18.** The male connector **18** connects to a second type of mating connector (female) **16.** The first LED module **40** is connected to a second LED module **40'** by the interconnection of a male mating connector **18** on the output side of the first LED module **40** to a female mating connector **16** on the input side of the second LED module **40'.** Repeating such type of connections between LED modules will enable the formation of a string of LED modules **40, 40', 40"** by repeating the connection between the first LED module **40** and second LED module **40'** until the string of LED modules is completed.

It should be understood that the three-pin disconnect assembly **14** is one example of connecting the current splitting adapter **10** and the string of LED modules. An alternate method of connection involves the use of wire nuts to connect the positive wires **102** and common wire **103** to additional LED modules. Any suitable means of connecting wires can be implemented to enable attachment and detachment of the current splitting adapter **10** and the LED modules.

The electrically positive channels and the common wire **103** are attached to a male mating connector **18,** which connects to a female mating connector **16.** In the example shown in FIG. 3A, the common wire **103** has a negative polarity. The three-pin disconnect assembly **14** can be detached to vary the number of LED modules interconnected in the string of LED modules. The female mating connector **16** is attached to the input of the LED module **40.** The output of the LED module **40** is connected to another male mating connector **18'.** This pattern continues throughout the system in a daisy-chained string of LED modules.

Turning to FIG. 3B, in an alternative LED system each LED module **40, 40', 40"** may be mounted in a carrier **25, 25', 25",** respectively. This alternative embodiment may also have the common wire 103 conducted through an opening in the carrier. The carriers **25, 25', 25"** may also include lenses (not shown) to manage or direct the output of light energy from the LEDs or a clear cover to protect the LEDs.

FIG. 4 shows the same layout as FIG. 3A but the main difference is the location of the current splitting adapter **10.** The current splitting adapter **10** described is not limited to connecting as a source because they can also connect as a sink. When connected as a constant current sink, the current is split at the end of the string of LED modules further away from the power supply. The current splitting adapter **10** is located between the last LED module and end plug **50** further away from the power supply **60.** When connected as a sink, LED modules can also be mounted in carriers **25,** such as those shown in FIG. 3B.

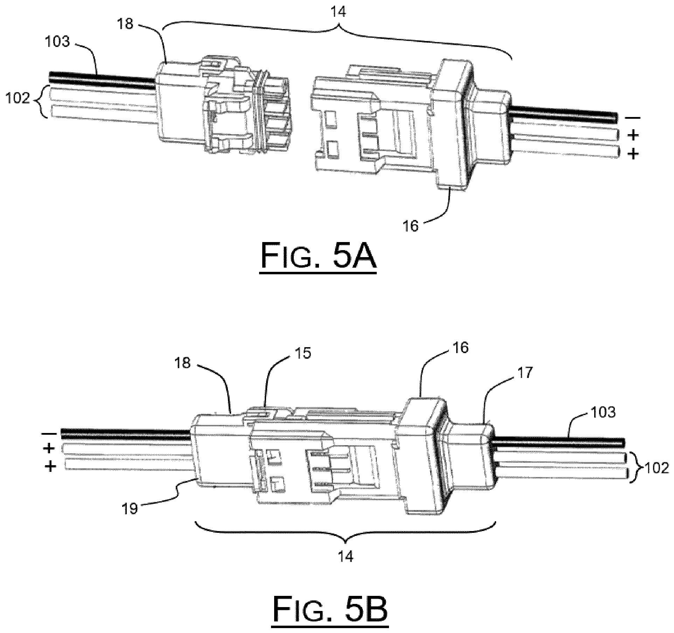

Turning to FIG. 5A and FIG. 5B, which are drawings further depicting the three-pin disconnect assembly **14** and mating connectors **16, 18.** As previously stated, the purpose of mating connectors **16, 18** is to allow for easy separation of the LED modules to adjust the quantity of LED modules or to replace one or more LED modules. The mating connectors **16, 18** also allow separation of the DC electrical energy output **60** and the end plug **50** from the string of LED modules, shown in FIGS. 3-4. The disclosed system has a male connector **18** for receiving the DC electrical energy. The female connector **16** connects to the male connector **18** and to the wires inputting DC electrical energy to the printed circuit board in the first LED module **40.** The female connector **16** is also connected to the wires for outputting the DC electrical energy from the first LED module **40** to a second LED module **40'.** The interconnection of the first LED module **40** and the second LED module **40'** constitute a subset of LED modules. This subset of LED modules can be interconnected with another LED module **40"** by interconnecting the male connector **18** on the output side of the second LED module **40'** with a female connector **16** on the input side of the other LED module **40".**

While male connectors **18** and female connectors **16** are shown as the first and second type of mating electrical connectors respectively in the preferred embodiment, those of ordinary skill in the art will understand that the use of male **18** and female **16** mating electrical connectors as the first and second type of mating electrical connectors will not affect the electrical operation of the string of LED modules.

As shown in FIG. 5A and in FIG. 5B, the design of the housing of the mating connectors **16, 18** enables a snap fit connection **17** between the mating connectors **16, 18.** In addition, the outside portion of the male **18** and female **16** connectors may include protrusions for frictionally holding the interconnected male **18** and female **16** connectors in place if the string of LED modules is placed within a channel such as a channel used to form a letter in an illuminated sign. As an example, latch mechanism **15** includes protrusions and is located on the side of the male side **18** of the connector.

Those of ordinary skill in the art will understand that a variety of different connectors may be used in addition to the ones illustrated in FIG. 5A and FIG. 5B. At the bottom of the male side **18** of the separable mechanical connector is another strain relief **19** which surrounds the three separable leads exiting from the male side **18** of the separable mechanical connector. It has also been found that if both the female side **16** of the separable mechanical connector and the male side **18** of the separable mechanical connector include an arrow formed or printed thereon, which arrows follow the path of the flow of direct current electrical energy, the assembly of the LED module into a string of LED modules is made easier for whoever puts together the string of LED modules.

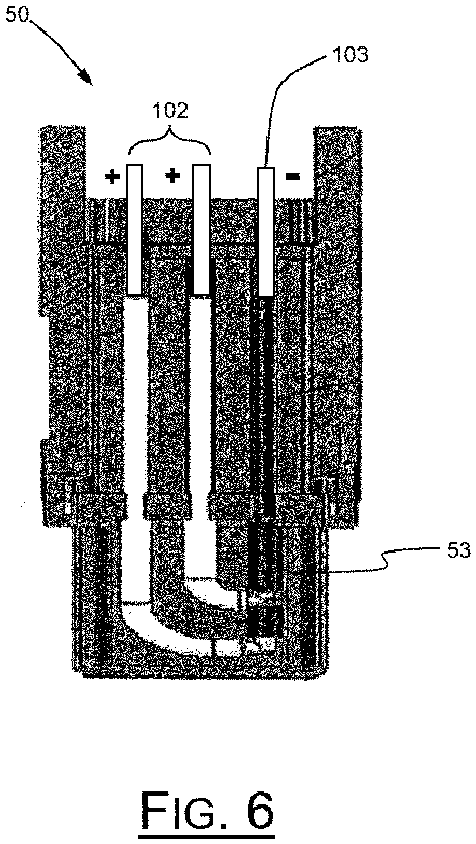

At the end of the string of LED modules is an end plug **50,** shown in further detail in FIG. 6. The end plug **50** provides an advantage because it eliminates the need for two wires to run from the last LED module **40"** back to the DC electrical energy power supply **60.** In small electrical signs using LEDs, reducing the amount of wires is highly beneficial. The cross-section of the end plug **50** shows where two outputs from the LEDs in the last LED module **40"** in the illustrated string of LED modules are combined into a common conductor **53.** The common conductor **53** is connected to the common wire **103.** Accordingly, the electrical circuit at each DC electrical energy power supply **60** is completed.

An LED system may include an end plug **50** connecting the electrical output of each of said individual LED series connections from the last LED module **40"** in the string of LED modules, to the output at a negative electrical polarity from each of said two electrically positive channels that powers the same individual LED series connection to complete the electrical circuits for all DC electrical energy channels, the end plug **50** being located on the output side of the last LED module **40"** being the farthest electrically connected to the DC electrical energy channels.

An alternative system may have an end plug **50** connecting the electrical output of each of the individual LED series connections from the last LED module **40"** in the string of LED modules, to the output at a positive electrical polarity from each of the two electrically negative channels that powers the same individual LED series connection to complete the electrical circuits for all DC electrical energy channels, the end plug **50** being located on the output side of the last LED module 40" being the farthest electrically connected to said DC electrical energy channels.

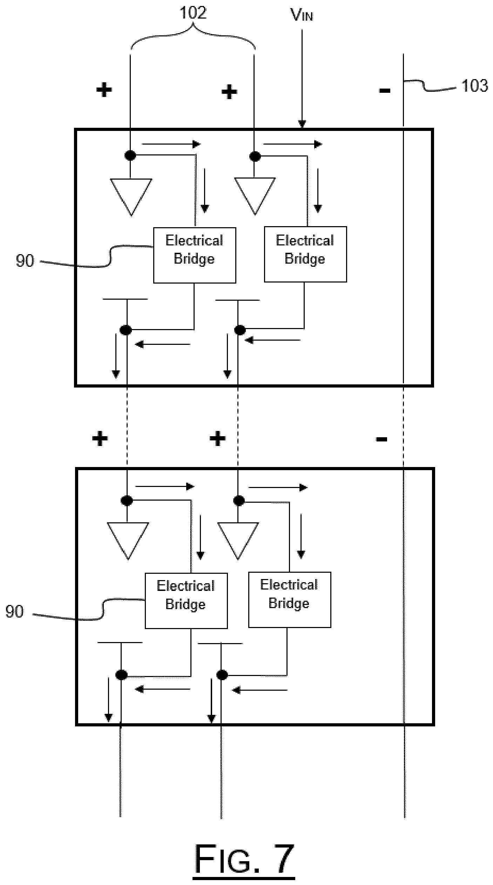

Referring to FIG. 7, which is a schematic of an electrical bridge circuit **90** used in LED systems. Those of ordinary skill in the art will understand that when LEDs are connected into a DC series electrical circuit, one of the LEDs with an open-circuit failure will open the DC series electrical circuit so that no DC electrical energy will pass through the electrical circuit. In this case, an electrical bridge circuit **90** is connected in parallel with each individual LED. The electrical bridge circuit activates when one of the individual LEDs is no longer able to pass DC electrical energy. Thereby, the DC electrical energy can pass through the electrical bridge circuit **90** instead and flow to the remaining operational LEDs to continue emitting light energy. Such electrical bridge circuit **90** typically includes a Zener diode.

Although the present invention has been described in terms of the foregoing preferred and alternative embodiments, these descriptions and embodiments have been provided by way of explanation of examples only, in order to facilitate understanding of the present invention. For example, some drawings illustrate the current splitting adapter being incorporated into a lighting assembly having a string of multiple LED modules. However, it should be understood that such lighting assemblies may incorporate only one LED module and would still be within the spirit and scope of the present invention. As such, the descriptions and embodiments are not to be construed as limiting the present invention, the scope of which is limited only by the claims of this and any related patent applications and any amendments thereto. Furthermore, it will be understood by those of skill in the art that any combination of embodiments, and capabilities associated with those embodiments, may be incorporated into one embodiment.

Those of ordinary skill in the art will understand that the disclosed invention may include other changes and modifications known to those of ordinary skill in the art. Such changes and modifications shall be included within the scope and meaning of the appended claims.

## Claims

1. A system for splitting an electrical current, said system operating within a lighting assembly, said lighting assembly including a direct current (DC) power supply and at least one light emitting diode (LED) module, said system comprising:
a) a current splitting adapter having an enclosure comprising a rigid case, said enclosure having a first end and a second end;
b) an integrated circuit contained within said enclosure, said integrated circuit comprising:
1) two functionally identical circuits configured for maintaining a constant current;
2) at least one current reference; and
3) a current amplifier in each of said two functionally identical circuits, said current amplifier comprising two transistors;
c) a sealant material located on at least a portion of said enclosure, said sealant material providing a moisture barrier;
d) two electrical inputs at said first end of said enclosure, said electrical inputs receiving DC electrical energy from said DC power supply, said electrical inputs comprising a first electrical input wire having a polarity and a second electrical input wire having a polarity opposite of said first electrical input wire, said second electrical input wire being a common wire;
e) three electrical outputs at said second end of said enclosure, said three electrical outputs comprising two electrical output wires each having the same polarity as said first electrical input wire and said common wire having a polarity opposite of said two electrical output wires; and
f) wherein a current of said first electrical input wire is divided within said integrated circuit, said division enabling output of said two electrical output wires each having the same polarity as said first electrical input wire, said two electrical output wires and said common wire being in electrical communication with said at least one LED module.

2. The system as defined in claim 1 wherein said enclosure further comprises an extension at each of said first end and said second end for mounting said current splitting adapter to a surface.

3. The system as defined in claim 1 or claim 2 wherein said current splitting adapter is connected as a current source in said lighting assembly.

4. The system as defined in claim 1 or claim 2 wherein said current splitting adapter is connected as a current sink in said lighting assembly.

5. The system as defined in any preceding claim wherein:
a) said first electrical input wire has a positive polarity;
b) said common wire has a negative polarity; and
c) said two electrical output wires each have a positive polarity.

6. The system as defined in any preceding claim wherein:
a) said first electrical input wire has a negative polarity;
b) said common wire has a positive polarity; and
c) said two electrical output wires each have a negative polarity.

7. The system as defined in any preceding claim wherein said DC power supply comprises a constant current power supply.

8. The system as defined in claim 7 wherein each of said two electrical output wires carries an equal amount of current, wherein said current remains constant as received by said at least one LED module.

9. The system as defined in any preceding claim wherein:
a) said three electrical outputs are connected to a first type of mating connector;
b) an input side of said at least one LED module includes a second type of mating connector; and
c) said current splitting adapter electrically connects with said at least one LED module by connecting said first type of mating connector with said second type of mating connector.

10. The system as defined in claim 9 wherein said first type of mating connector is a male connector and said second type of mating connector is a female connector.

11. The system as defined in claim 10 wherein said first type of mating connector and said second type of mating connector snap fit together.

12. The system as defined in claim 9 wherein said lighting assembly comprises:
a) a string of interconnectable LED modules;
b) each of said LED modules within said string of LED modules having said second type of mating connector on the input side of said LED module into which is received two electrical input wires and a common wire;
c) each of said LED modules within said string of LED modules having said first type of mating connector on an output side of said LED module, the output side of each of said LED modules having two electrical output wires and a common wire; and
d) wherein each of said LED modules within said string of LED modules is interconnectable by connecting said first type of mating connector on the output side of one of said LED modules to said second type of mating connector on the input side of another of said LED modules.

13. The system as defined in claim 12 further comprising an end plug configured to combine said two electrical output wires from a last LED module in said string of LED modules into a common conductor, wherein said common conductor is electrically connected to said common wire, said common wire having a polarity opposite of said two electrical output wires.

14. The system as defined in claim 13 wherein said end plug is located on the output side of the last LED module within said string of LED modules.

15. The system as defined in claim 12 wherein each individual LED in each of said LED modules is in a series connection with another LED in the next LED module within said string of LED modules, and wherein each individual LED in each of said LED modules receives an equal amount of current through said series connection.
